(19) Europäisches Patentamt
European Patent Office
Office européen des brevets

(11) **EP 2 323 046 A1**

(12) **EUROPEAN PATENT APPLICATION**

(43) Date of publication:
**18.05.2011 Bulletin 2011/20**

(51) Int Cl.:
***G06F 17/30*** *(2006.01)*

(21) Application number: **09382213.8**

(22) Date of filing: **16.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Telefónica, S.A.**
**28013 Madrid (ES)**

(72) Inventors:
• **Anguera Miro, Xavier**
  **28013, MADRID (ES)**

• **Obrador Espinosa, Pere**
  **28013, MADRID (ES)**
• **Oliver Ramirez, Nuria**
  **28013, MADRID (ES)**

(74) Representative: **Carpintero Lopez, Francisco et al**
**Herrero & Asociados, S.L.**
**Alcalá 35**
**28014 Madrid (ES)**

(54) **Method for detecting audio and video copy in multimedia streams**

(57) This invention proposes a multimodal detection of video copies. It first extracts independent audio and video fingerprints representing the changes in the content. It then proposes two alternative copy detection strategies. The full-query matching considers that the query video appears entirely in the queried video. The partial-query matching considers that only part of the query appears. Either for the full query or for each subsegment in the partial-query algorithm, the cross-correlation with phase transform is computed between all signature pairs and accumulated to form a fused cross-correlation signal. In the full-query algorithm, the best alignment candidates are retrieved and a normalized scalar product is used to obtain a final matching score. In the partial query, a histogram is created with optimum alignments for each subsegment and only the best ones are considered and further processed as in the full-query. A threshold is used to determine whether a copy exists.

FIG. 1

EP 2 323 046 A1

## EP 2 323 046 A1

**Description**

## TECHNICAL FIELD OF THE INVENTION

The present invention relates to content-based multimedia information analysis for detection of audio and/or video copy from one or more video sources including audio and video tracks.

## BACKGROUND OF THE INVENTION

In today's digital world, efficient multimedia data management tools are a need, in order to organize and search the vast amounts of video content that not only is generated daily but in many cases is made available to the public. Increasing storage capabilities enable the archival of most of this multimedia content, including professional TV broadcasts and internet video services (e.g., Web-TV, video blogs, video sharing sites, public video archives, etc.) which contain both professionally generated videos and user generated content.

Reliable content-based copy detection algorithms (CBCD) are one of the key technologies in multimedia management, which detects video duplicates in a video database. CBCD techniques analyze the content in order to extract a set of features from the video that are then used to compare it with putative duplicates.

CBCD can be distinguished from traditionally watermarking techniques since these latter need to include the watermarks when generating the material, which is not always feasible. In CBCD the content itself is the fingerprint, not needing any extra information to be added to it.

The main applications of CBCD include: (a) storage optimization; (b) copyright enforcement; (c) improved web search and (d) concept tracking. In storage optimization, the goal is to eliminate exact duplicate videos from a database and to replace them with links to a single copy or, alternatively, link together similar videos (near duplicate) for fast retrieval and enhanced navigation. Copyright enforcement strives at avoiding the use and sharing of illegal copies of a copyright protected video. In the context of web search, the goal is to increase novelty in the video search result list, by eliminating copies of the same video that may clutter the results and hinder users from finding the desired content. Finally, concept tracking in video feeds focuses on finding the relationship between segments in several video feeds, in order to understand the temporal evolution of, for example, news stories.

The application of CBCD algorithms to videos has been usually approached from a video analysis perspective, by extracting and comparing features from the videos. Most CBCD algorithms proposed to date are monomodal, focusing mainly on the video track of the videos. Recently, however, a number of authors have looked at videos with a multimodal perspective. An example of multimodal approach is proposed by Naphade et al. in "Supporting audiovisual query using dynamic programming", ACM Multimedia, 2001, where the authors propose using both the audio and video tracks to support audio-visual queries. On the audio side, they use dynamic time warping (in order to align the Mel frequency cepstral coefficients (MFCC) from the audio tracks of the two videos being compared. On the video side, they compare global features (colour histogram, edge direction histogram, motion magnitude and motion direction histograms) independently. The fusion of all aligned streams is done by means of a weighted sum. Unfortunately, they assume that the optimum alignments of all independent streams belong to the same DTW path, as they consider the optimum path value for each stream.

Depending on the nature of the features used in the video analysis, the existing solutions use either local features extracted from video keyframes either global features computed from the low level features or both local and global features. A local feature-based CBCD algorithm is described in "A hierarchical scheme for rapid video copy detection" by Wu et al (IEEE Conf. on Applications of Computer Vision, 2008), where an R*-Tree indexing structure is proposed to be used followed by a multilevel feature space construction and search strategy according to a hierarchical scheme. Wu et al. also proposed in "Practical elimination of near-duplicates from web video search" (ACM Multimedia, 2007) a hierarchical approach mixing both local and global features for the task of web video search, involving an initial triage which uses fast global features derived from colour histograms, followed by a local feature-based comparison that is only applied to the videos where the decision is not clear. A thorough review of global approaches is found in "Detection of video sequences using compact signature" by Hoad et al. (ACM Transactions on Information Systems, 2006). Hoad et al. offer a system using a shot-length-based signature -similar to Indyk, a colour-shift signature -taking into account the overall change in colour from frame to frame, and a centroid-based signature -measuring the change in position of the brightest and darkest region centroids in each frame and propose fusing all the signatures into one signature by interleaving the values for each frame. Unfortunately, the matching methods described by Hoad et al. are limited to work with full queries against videos of similar or longer length.

Image-based CBCD algorithms have some problems, depending on the feature they are based on:

- Local features are those extracted from selected video frames. Local feature-based CBCD algorithms, although achieving good matching performances, have the problem of high computational burden, as they need to: a) extract the appropriate keyframes from both videos; b) compute each keyframe's local descriptors; and c) find the optimum alignment between local descriptors to determine whether the two videos are near-duplicates or not.

- Global features are those computed over the whole video aiming at extracting an overall signature from it. They are normally extracted only from the video track. Global features are usually faster to compute than local features. However, global features have typically been linked to poor matching performances. In addition, they require a minimum video length in order to reduce false alarms in the comparisons.

Summarizing some problems of existing solutions in their application for detecting video copies, the main handicaps found are:

- algorithms that has focus on the analysis of local features typically applies single image analysis/comparison techniques to CBCD and requires an extra step in order to align the features from the two videos being compared, tending to achieve good matching performances at high computational cost;
- the extraction of global video features from a low level to conform a fingerprint or signature of the video allows for fast video comparisons at the expense, however, of lower performance;
- over all, video analysis techniques usually consider only one modality (typically image) or a rudimentary combinations of two modalities to determine when two videos are duplicates of each other, which has the drawback that strong variations in the video/audio quality (and/or elimination of either of them in the duplicate) jeopardize the detection.

## SUMMARY OF THE INVENTION

The present invention serves to solve the aforesaid problem by providing a method for multimodal video copy detection, which is able to decide whether two or more videos are near duplicate of each other, and the decision is based on the fusion of information (global features) from both the video and the audio tracks of the videos (multimedia streams) being compared.

Depending on the nature of the query video which is applied to detect a video copy in it with respect to a queried (reference) video or multimedia stream, two possible cases are proposed as follows:

- The first case is called the full-query matching and is appropriate when the entire input query is expected to be found in another video (queried video). Therefore, the queried video might be a near duplicate of the query of similar or longer duration, containing the query inside. The full-query matching method proposed here is fast when searching for near duplicate videos where both the query and queried multimedia streams are compared in their entirety. It is particularly suitable to detect advertisements in broadcasted material, where predefined advertisements (considered as queries signals) are detected in life broadcast video (queried signal).
- The second case is called the partial-query matching, which is more flexible than the full-query version because it is able to find any partial sequences from the query that are part of the queried videos. It is useful when only parts of the query are copies (altered or not) of a segment of the queried video. This flexibility in the matching comes at a higher computational cost, as no information is known a priory regarding which sequences from either video match each other. The partial-query matching uses an iterative algorithm that finds possible matching sequences, and their length.

In both cases, the method for video copy detection works in two basic steps: firstly, global descriptors are extracted in both the video and audio tracks independently, using different techniques; second, the similarity metrics of the audio and video tracks are computed and fused (either using the whole query or subsegments of it), in order to return a final score that determines the similarity between both videos.

An aspect of the invention refers to a method for detecting audio and video copy in multimedia streams, the multimedia stream (from a video source) having audio and video tracks and the method comprising the following steps:

- separating the audio and video tracks of a first multimedia stream V1 into independent audio and video streams constituting the reference or queried multimedia signal, and performing the same separation in audio and video modalities with a second multimedia stream V2 which constitutes the query multimedia signal to be compared against the reference;
- for both multimedia streams V1 and V2, obtaining at least one digital acoustic fingerprint (or audio signature) as well as at least one digital video fingerprint (or video signature) by extracting global features, not only of visual video data but also of audio data, from the pair of multimedia signals, queried video V1 and query video V2;
- defining one or more segments in the query signal V2, containing the segment the whole query or just a piece of it formed by certain number of video frames with audio and video features (in a full-query matching, the query signal is split into a plurality of segments in each of the available modalities: video and audio; in case of a partial-query matching, a single segment which contains the whole query signal is used; in both the partial-query and the full-query, the queried signal V1 is treated in its entirety);

- comparing each digital fingerprint (in each respective modality: audio or video) corresponding to a segment of the query signal V2 with each digital fingerprint of the queried signal V1, by computing the Generalized Cross Correlation with Phase Transform (GCC-PHAT) between each pair of digital audio fingerprints as well as between each pair of digital video fingerprints from the query and queried signals respectively in order to obtain a cross-correlation plot for every pair of fingerprints (if more than one segment of the query are defined in the previous step, that is, a partial query is performed, the cross-correlation plots are added and certain maximum values of these plots are used to generate a histogram of the obtained peaks to determine which peak/s are considered further, as described below);

- fusing or adding together all the resulting cross-correlation plots to obtain one multimodal cross-correlation plot and determining at least one maximum point of the single multimodal cross-correlation plot (in the full query matching, this is a global maximum; in the partial query matching, the fused cross-correlation measures are further processed by an histogram-based best alignment selection algorithm which selects the N-best maxima of the cross-correlation plot and registered them into a delays histogram, repeating the process for every segment of the query audio and video signal V2);

- from the maximum or maxima found before in the multimodal cross-correlation plot, determining an optimum match delay between the pair of compared fingerprints (in the full query matching, the global maximum corresponds to the best alignment delay; in the partial query matching, the best alignment delays are obtained from the delays histogram);

- for each audio and video fingerprint pairs of V1 and V2, delaying every fingerprint to the optimum match delay;

- computing a similarity score between both queried V1 and query V2 signals by calculating a normalized scalar product of all digital fingerprints delayed to the optimum match delay and weighting said product by a priority weight $W_i$ assigned to each digital fingerprint (said weight $w_i$ can be assigned for giving equal importance to the audio and visual tracks, or the appropriate weight $W_i$ for each modality of audio and video can be calculated by using the concept of entropy which indicates the amount of information useful for discrimination between potential duplicates, as explained in the detailed description of the invention) ;

- comparing the similarity score with a threshold value determined according to certain characteristics of the query signal (noise, transformations applied to the video, etc.) in order to decide whether the pair of multimedia streams considered hear are duplicates, near duplicates (i.e., whether the query signal V2 presents a video copy, identical or altered, of the queried reference V1),.or not.

The multimodal video copy detection described here (in its two versions: full-query and partial-query matching) fuses multiple fingerprints extracted from both the audio and video tracks. For both full-query and partial-query cases, the audio and video signatures can be extracted off-line for every multimedia stream to be compared and the Generalized Cross-Correlation with Phase Transform (GCC-PHAT) computed between each pair of signatures implements a frequency domain weighting of the cross-correlation between two signals, given by

$$R_{x_1,x_2}^{GCC}(m) = \mathcal{F}^{-1}(X_1(w) \cdot X_2^*(w) \cdot \psi_{PHAT}(w))$$

being X1(w) and X2(w) the signals to be compared in frequency domain (usually converted from time domain using Fast Fourier Transform, FFT); $\mathcal{F}^{-1}$ is the inverse of the FFT and $\psi_{PHAT}(w) = \dfrac{1}{\|X_1(w) \cdot X_2^*(w)\|}$ is a weighting function where $\|X\|$ denotes the modulus of X.

The GCC-PHAT returns a normalized cross-correlation plot (with values between 0 and 1) and is computed for each of the audio and video signature pairs from the two videos, obtaining a cross-correlation plot for each of them.

In the full-query version of the method, both the queried and query videos, V1 and V2, are compared in their entirety. All the cross-correlation measures are added together to form a multimodal cross-correlation whose maxima correspond to the temporal delays with the optimal alignment for all modalities If the maximum (i.e., the delay for which both signals are most similar) of the resulting cross-correlation plot is at $m_{max}$, the similarity score between V1 and V2 is calculated as the weighted-normalized scalar product of all signatures in the optimum delay $m_{max}$.

$$Score_{x_1, x_2}(m_{max}) = \sum_{i=1}^{N} W_i \cdot \frac{x_1^i \cdot x_2^i[m_{max}]}{|x_1^i||x_2^i[m_{max}]|}$$

Wi is the priory weight assigned to each signature i of a set of N available audio and video signatures, $x_1^i$ and $x_2^i$ form a pair of digital fingerprints of the same modality (audio or video) from V1 and V2 respectively (that is, $x_1^i$ and $x_2^i$ represent the digital data in the segments being compared, being one segment the whole query or just a piece of the query, depending upon a full or partial query matching, and the other signal for comparison is the whole queried), $x_2^i[m_{max}]$ is the signature i (i = 1::N) (from the query video V2) delayed to the optimum match delay $m_{max}$, and |x| is the L2-norm of each signature vector $|x| = \sqrt{\sum_m x^2[m]}$.

In the partial-query version of the method, useful when only parts of the query video V2 are copies (altered or not) of a segment of the original queried video V1, the query signal V2 is split into a series of windowed segments (with a configurable number of video frames) and each segment is compared to the entire queried signal V1 at each available modality by means of the GCC-PHAT metric and the results are fused together into one cross-correlation plot as in the full-query matching. However, in this case the N-best (N is the number of available signatures) maxima of the fused cross-correlation plot are found and the N-best delays are saved into a delays histogram, iterating the computation of the maxima and delays for every windowed segments of the query. The use of the delays histogram follows the rationale that the delays defining segment matches should remain constant throughout the entire segment, ending with a peak in the histogram, whereas non-matching segments should return random delays. Note that these delays are stored in the histogram in absolute terms with respect to the beginning of the query signal. Next, the best alignment delays are determined from the delay histogram by finding the peak (max count) and selecting delays within a [max count-1, max count] range. For each delay, the query and queried video windowed segments in each of the available modalities are retrieved and the weighted scalar-product is computed as in the full-query matching.

A similarity threshold is used in order to determine the minimum score between any two videos representing that a video copy is detected (discriminating similarity scores of identical duplicates or near duplicates from the scores between segments which are non-duplicates).

A last aspect of the invention deals with a computer program comprising program code means which execute the method described before, when loaded into processing means of any form of programmable hardware, such as a general purpose processor of a computer, a digital signal processor, a field-programmable gate array (FPGA), an application-specific integrated circuit (ASIC), a microprocessor, a micro-controller, etc.

The proposed invention has the advantage, on the one hand, of effectively leveraging the multimodal nature of videos (audio + video tracks) to perform the task at hand (video copy detection) resulting in a very robust system with excellent results in standard databases. On the other hand, by using carefully chosen features obtained globally from both the audio and video streams of the input videos, the present invention achieves similar or better performances than systems that use local analysis and comparison of individual frame features in the videos (monomodal systems, which only take into account the image information but not audio data (or viceversa) and usually incur in longer processing times). The described solution can be scalable and used in systems handling massive amounts of video data, like YouTube.

## DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:

Figure 1. - It shows a diagram of blocks with the main steps of the method for video copy detection in multimedia streams over, according to a possible embodiment of the invention using a partial query matching.

Figure 2. - It shows a diagram of blocks with the main steps of the method for video copy detection in multimedia streams over, according to a possible embodiment of the invention using a full query matching.

Figure 3. - It shows a representation of an acoustic metric calculated commonly for both full and partial query matching to extract audio variations from the audio tracks of the multimedia streams.

Figure 4. - It shows a representation of the combined hue and luminance features histogram variation extracted from the video tracks of the multimedia streams for both full and partial query matching.

Figure 5. - It shows a representation of highlight centroid movements from frame to frame in the video tracks of the multimedia streams tracked for both full and partial query matching to extract highlight centroid variations.

## DETAILED DESCRIPTION OF THE INVENTION

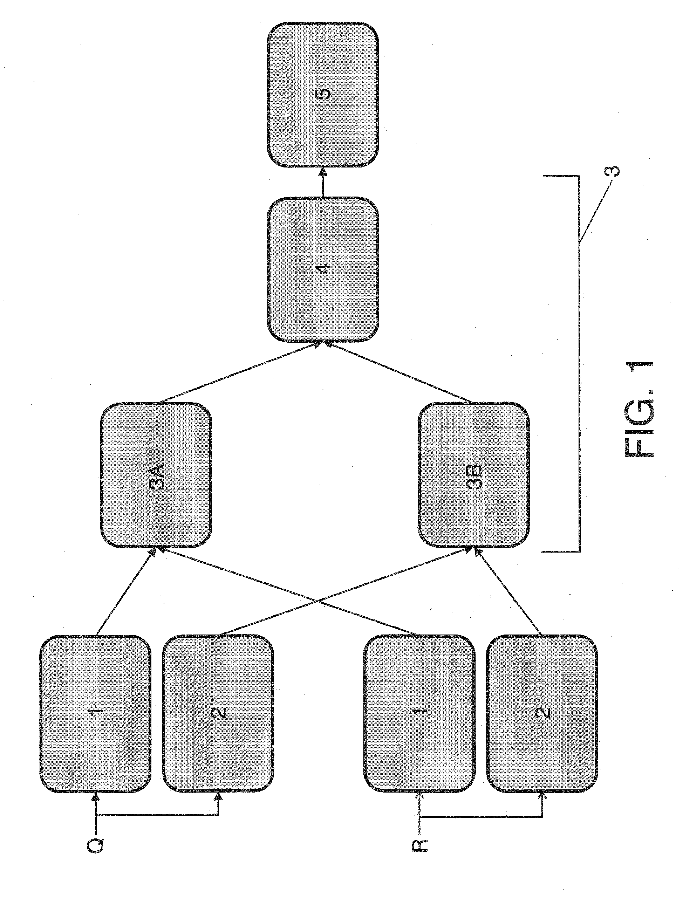

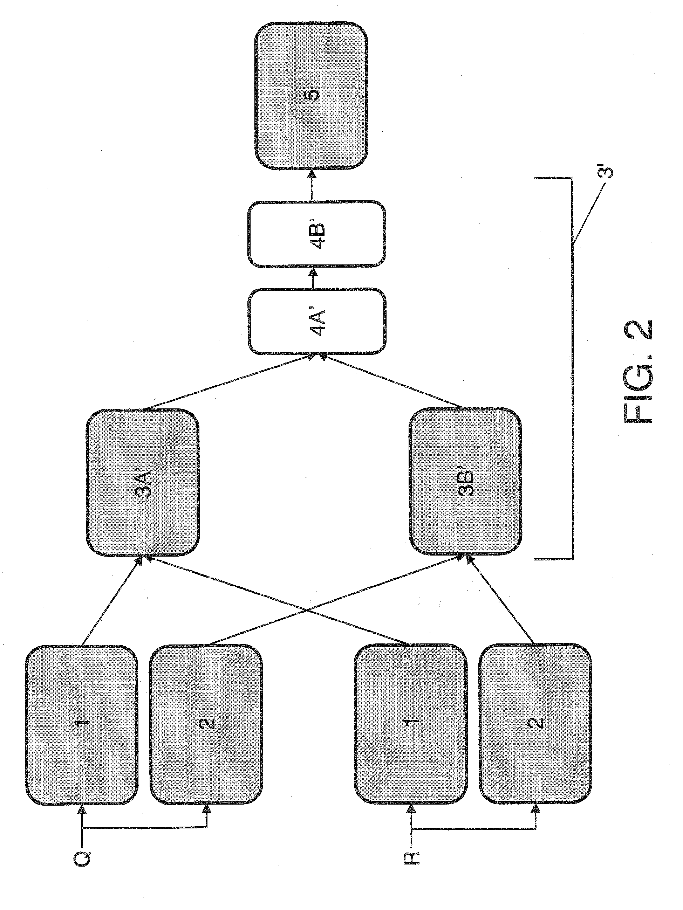

Figures 1 and 2 show in a block diagram the main modules for carrying out a partial query matching and a full query matching respectively between a query video suspect of being a copy Q and a queried video of reference R. More particularly, the modules are the following ones:

   1. Extraction and postprocessing of acoustic fingerprints (audio signature extraction)
   2. Extraction and postprocessing of video fingerprints (video signature extraction)

Depending on the type of query (full query matching, if multiple segments from the query Q and the queried R videos are used for comparisons; partial query matching, if a plurality of segments from the query Q video is compared against the queried R video as a whole signal), comparison functions 3A and 3B are performed for audio signatures video signatures respectively in partial query matching (Figure 1) while full query matching (Figure 2) requires iterative comparison functions 3A' and 3B' also for both audio and video signatures.

All resulting comparison functions from 3A' and 3B' in the full query matching are fused by a weighted sum function 4A', in a same way as in the weighted fusion 4 of partial query matching, and the best alignment points between query and queried matches for each iteration are added to a histogram in 4B'. At the end of the iterations the possible matches histogram in 4B' contains all possible optimum delays between query and queried signals. The peaks in such histogram are used to the final copy decision 5 by the method. In the partial query matching, there is no histogram but similarly the results from the comparisons are all accumulated in the weighted fusion 4 block to decide on the similarity between videos.

The two first modules on digital fingerprints extraction are essential and common to the full and partial query matching algorithms, as detailed below:

1. Audio Signature Extraction

The global audio signature is extracted by analyzing the acoustic changes that take place in the audio track of the video. One dimensional signal is created from the audio track whose minima correspond to places where there is a change in the speaker or in the sounds being recorded.

First, video and audio tracks are separated into independent streams. The audio track is down sampled to 16KHz, for instance, 16 bits/sample and converted to 24 Mel Frequency Cepstrum coefficients (MFCC), including cepstrum derivatives, acceleration and energy, for example computed every 10 milliseconds. These features are typically used in speech processing and acoustic segmentation techniques. In particular, the Bayesian Information Criterion (BIC) is used as the basis to obtain a measure of how similar the audio is in both sides of the analysis point (and hence whether there is a change in the audio signal or not). BIC can be used as in acoustic segmentation by computing the acoustic metric for frame i:

$$\Delta BIC(i) = \log L(X[i-W, i+W] | M_{ab}) - \log L(X[i-W, i] | M_a) - \log L(X[i, i+W] | M_b)$$

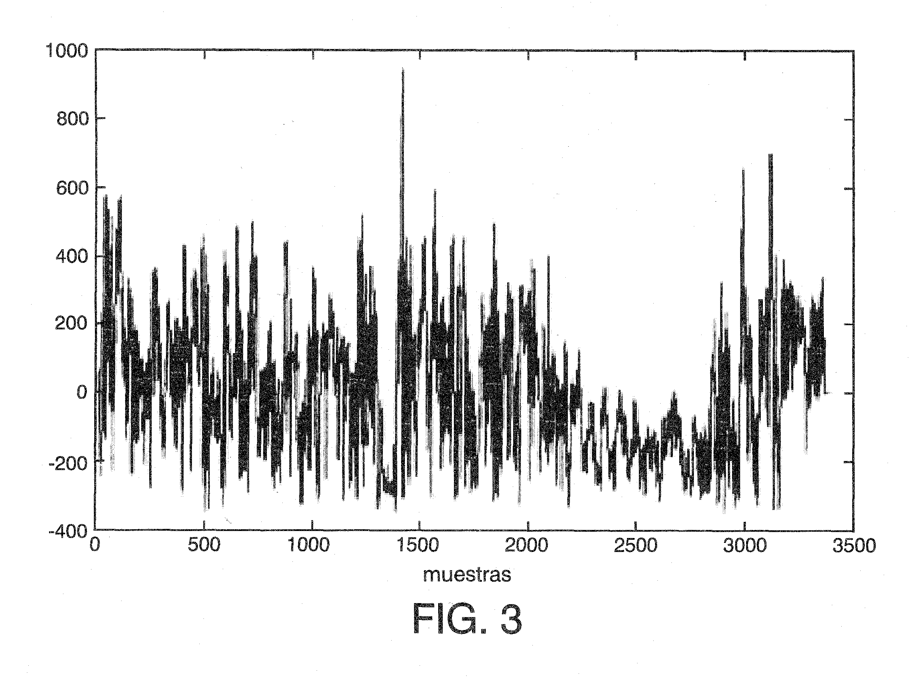

where X[$i,j$] is an n-dimensional sequence corresponding to the MFCC features extracted from the audio segment from time t=i to t=j; $M_{a,b,ab}$ are three Gaussian Mixture Models (GMM) composed of a weighted sum of Gaussian Mixtures, such that the number of Gaussians in $M_a$ and $M_b$ is the same and half of the number of Gaussians in $M_{ab}$; and W corresponds to the analysis window, set to 100 MFCC frames (one second of audio). The ΔBIC acoustic metric is computed every 100 milliseconds in a sliding window along the input signal, obtaining an acoustic change signature with 10 points for every second of video, which accounts for a 0.16kbps signature stream. Figure 3 shows an example of the ΔBIC acoustic change pattern extracted for a 173 second long video. The local maxima in the plot represent places where the surrounding audio is maximally similar. Conversely, the local minima represent acoustic change points; small changes within the same acoustic condition (positive value) or large changes from one acoustic condition to another (negative value).

In addition to the BIC-based signature, another two signatures can be extracted in a similar way: the Kullback-Leibler divergence between two Gaussian probability functions computed in either side of the analysis window, with the same parameters as the BIC distance, and an XBIC distance with the same configuration as the BIC distance disclosed in "XBIC: Real-Time Cross Probabilities measure for speaker segmentation" (Anguera et al., ICSI Technical Report TR-05-008, 2005).

2. Video Signature Extraction

The global video signatures are extracted by considering the temporal visual changes occurring in the video. Three features can be extracted (hue-luminance histogram intersection and lightest/darkest centroid variations) from which three video signatures are generated that are fed to the fusion module 4, where they are combined with the audio signatures, in order to make the final comparison with the reference video R.

A first descriptor of video variation consists of the change in colour and luminance (hue and luminance variation-in HLV colour space), in a similar way as the audio signature. This approach considers all colours channels in order to detect video variations. This technique allows tracking typical consumer camera variations that expand over multiple frames:

- Auto white balance, which adapts to the light source illuminating the scene (i.e., so that white will be rendered white independently of the illuminant);
- Auto contrast and auto levels, which adapt to the amount of light in the scene and its distribution.

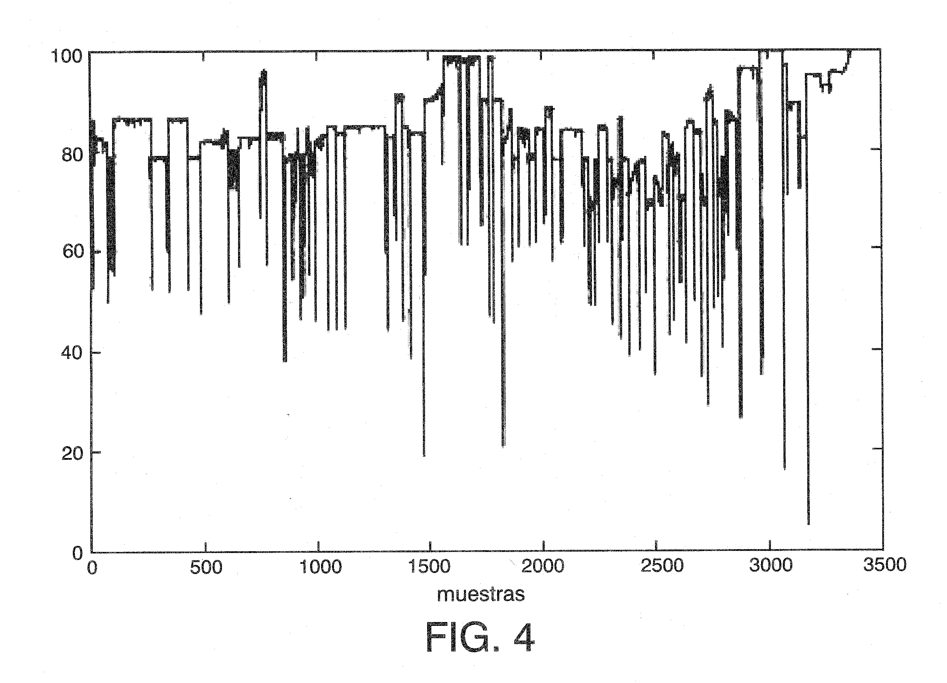

Figure 4 depicts an example of the combined Hue-Luminance histogram intersection feature for a video of 173 seconds. Sudden drops in this plot indicate scene changes, while ramps indicate fade-in/outs or other progressive changes.

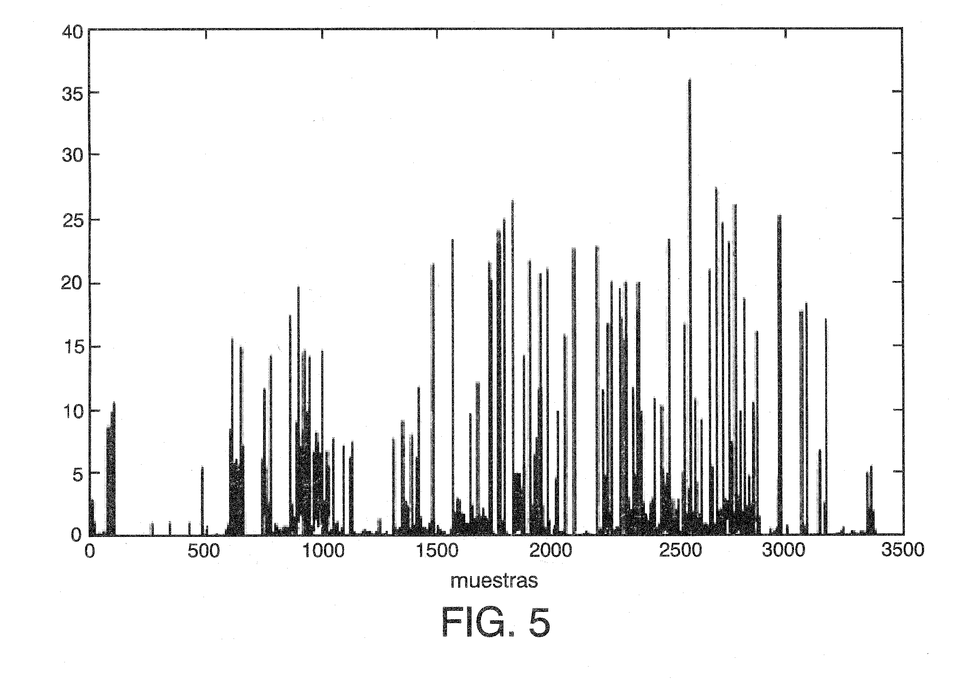

A second descriptor tracks the highlights (areas of high luminosity) in the image, since the motion of high luminosity areas should be very similar between a video and a transformed version of it. This part of the process tracks the movement of the highlight centroid from frame to frame in absolute numbers. If the highlight region remains static from frame to frame, this will result in zero absolute change; if it pans slowly, say from left to right, it will generate a roughly constant value; and if there is a scene cut, it will typically generate a high peak at the frame where the cut takes place, as shown in Figure 5.

Finally, a third descriptor tracks the movement of the centroid of the darkest area frame by frame, in the same way as with the highlight centroid.

Once the audio and video signatures have been extracted, they are post-processed in order to obtain signals well suited to be used by the (full query or partial query) matching algorithms presented below. A different processing is applied, depending on the signal involved.

3. Full-query Matching Algorithm

Once the audio and video signatures have been extracted from the videos to be compared, the Generalized Cross Correlation with Phase Transform (GCC-PHAT) between the signatures is computed.

The GCC-PHAT metric is computed for each of the audio and video signature pairs from the two videos, obtaining a cross-correlation plot for each of them and once the point of optimum alignment (i.e., global maximum of the multimodal cross-correlation plot) is found, $m_{\max}$, the similarity score between V1 and V2 is defined, being V1 the queried reference R and V2 representing the query video Q, as the weighted-normalized scalar product of all signatures aligned in the optimum delay:

$$Score_{v_1,v_2}(m_{\max}) = \sum_{i=1}^{N} W_i \cdot \frac{x_1^i \cdot x_2^i[m_{\max}]}{|x_1^i||x_2^i[m_{\max}]|}$$

equation 1

where Wi is the priority weight assigned to each available signature i (i = 1..N); $x_1^i$ and $x_2^i$ are the signals being compared for each modality/feature digital data i, $x_2^i[m_{max}]$ is the signature in the query video, delayed to the optimum match delay; and | . | is the L2-norm of each signature vector.

The priority weight Wi is a relative weight given to each modality in the final score, following that sum(wi) = 1. In order to automatically define the appropriate weight for each modality, the concept of entropy is used:

$$Entropy(X) = -\sum \left(x[i] * \ln(x[i])\right)$$

where X={x[1] ... x[N]} is an unidimensional sequence of probabilities (with values from 0 to 1). The entropy indicates the amount of information present in the signal, i.e. how uncertain is the random variable that generates the signal. High values of entropy indicate low uncertainty, and vice versa. In our particular application we are interested in measuring how well a modality distinguish that a segment sv1 is similar to another sv2 and discriminate sv1 from any other segment. For this purpose it is considered that a modality whose segment fv1/2i has low entropy contains much more discriminatory information that will allow for its score to be more trustful than higher entropy modalities. Hence the priority weight $W_i$ for signature i is formulated as:

$$w_i = \frac{1}{\max(entropy(f_{v1i}), entropy(f_{v2i}))}$$

For each pair of compared segments, sv1 and sv2, the inverse of the segment with maximum entropy is taken as the lower bound discriminability capability of that modality in those segments. Note that before computing the entropy of the sequence, normalization of the sequence values between 0 and 1 is needed to simulate a sequence of probability values. The features are normalized by subtracting the minimum value of the segment to each point and dividing by the dynamic range of the signal.

3'. Partial-query Matching Algorithm

The partial-matching algorithm takes the same input as the full-query algorithm: the audio and video signatures from the two videos to be compared. The query signal is here split into windowed segments, for instance defining windows of size T=1500 video frames and sliding along the signal every S=300 video frames. Each segment is compared to the entire queried video at each available modality by means of the GCC-PHAT. The cross-correlation measures are fused together into one cross-correlation plot in the same way as in the full-query matching algorithm. In addition, now the n-best (n=3 in the system presented) maxima of the fused cross-correlation plot are found and then are saved into a delays histogram. This process is repeated in all windowed segments of the query. Next, the best alignment delays are determined from the delay histogram by finding the peaks (max_count) and selecting delays with counts within the [max_count-1, max_count] range. For each delay, the weighted dot-product is computed by applying equation 1 in order to obtain the similarity score between the original queried segment V2 and the considered segment of the query video. The similarity between the segments corresponds to the largest dot-product obtained among all top delays considered.

Note that in both algorithms the final block of copy decision (5) executes the normalized dot/scalar product between the aligned segments. In the case of the full matching, the best alignment candidates are retrieved and the normalized scalar product is used to obtain the final matching score, and this is performed with the whole query and the queried videos. In the case of the partial matching, wherein the delay histogram is created with optimum alignments for each segment, said normalized dot/scalar product is computed only with the best segments, i.e., the ones for which the chosen best alignment (the frames in queried video without query counterpart are assigned to result 0) is obtained.

Note that in this text, the term "comprises" and its derivations (such as "comprising", etc.) should not be understood in an excluding sense, that is, these terms should not be interpreted as excluding the possibility that what is described and defined may include further elements, steps, etc.

**Claims**

1. Method for detecting audio and video copy in multimedia streams with audio and video tracks, comprising:

- separating the audio and video tracks of a first multimedia stream V1 into an audio stream and a video stream of a queried multimedia signal which are independent;
- separating the audio and video tracks of a second multimedia stream V2 into an audio stream and a video stream of a query multimedia signal which are independent;
- for both the first multimedia stream V1 and the second multimedia stream V2, extracting global visual video features to obtain at least one digital video fingerprint;

**characterized by** further comprising:

- for both the first multimedia stream V1 and the second multimedia stream V2, extracting audio features to obtain at least one digital acoustic fingerprint;
- defining at least one segment of the query multimedia signal;
- comparing each digital video fingerprints corresponding to a segment of the query multimedia signal with each digital video fingerprints of the queried multimedia signal, and comparing each digital acoustic fingerprints corresponding to a segment of the query multimedia signal with each digital acoustic fingerprints of the queried multimedia signal, by computing the Generalized Cross Correlation with Phase Transform between each pair of digital fingerprints to obtain a cross-correlation plot for each pair of digital fingerprints;
- computing the weighted sum of all the cross-correlation plots to obtain one multimodal cross-correlation plot for each pair of digital fingerprints;
- determining at least one maximum of the multimodal cross-correlation plot to find an optimum match delay $m_{max}$ between a segment of the query multimedia signal and the queried multimedia signal;
- delaying the, at least one, digital video fingerprint and digital acoustic fingerprint to the optimum match delay $m_{max}$ for each segment of the query multimedia signal;
- computing a similarity score between the first multimedia stream V1 and the second multimedia stream V2 by calculating a normalized scalar product of all digital fingerprints from each segment of the query multimedia signal and the queried multimedia signal each pair of digital fingerprints delayed to the optimum match delay and weighting said product by a priority weight $W_i$ assigned to each pair of digital fingerprints;
- comparing the similarity score with a threshold value defined to determine whether the at least one segment of the query multimedia signal is a video copy of the queried multimedia signal.

2. Method according to claim 1, wherein the similarity score between the first multimedia stream V1 and the second multimedia stream V2 is computed as:

$$Score_{v1,v2}(m_{max}) = \sum_{i=1}^{N} W_i \cdot \frac{x_1^i \cdot x_2^i[m_{max}]}{|x_1^i||x_2^i[m_{max}]|}$$

being i = 1, 2, ...N; N is the total number of digital fingerprints;

$x_1^i$ and $x_2^i$ are digital acoustic fingerprints pair or digital video fingerprints pair from the first multimedia stream V1 and the second multimedia stream V2 respectively for the segment of the query multimedia signal,

$W_i$ is the priority weight assigned to each pair of digital fingerprints $x_1^i$ and

$x_2^i[m_{max}]$ is the signature i (i = 1::N) in the query multimedia signal, delayed to the optimum match decay $m_{max}$ ;

|x| denotes the L2-norm of each digital fingerprint.

3. Method according to claim 2, wherein the assigned priority weight $W_i$ is $W_i$ = 1/max(Entropy ( $x_1^i/2 \cdot i$ ), Entropy

( $x_2^i$ /2·i)))), being

$$Entropy(X) = - \sum (x[i] * \ln(x[i]))$$

**4.** Method according to any preceding claim, wherein the global visual video features which are extracted comprises hue and luminance variation, and highlight centroid variation.

**5.** Method according to any preceding claim, wherein the audio features are extracted using the Bayesian Information Criterion.

**6.** Method according to any preceding claim, wherein a single segment is defined in the queried multimedia signal is defined as a single segment s2containing the full second multimedia stream V2.

**7.** Method according to any claim 1-5, wherein the query multimedia signal is split into a plurality of segments and the multimodal cross-correlation plot is computed for each segment, determining the N best maxima of the multimodal cross-correlation plot, being N the total number of digital fingerprints.

**8.** Method according to claim 7, further comprising saving the N best maxima of the multimodal cross-correlation plot into a delay histogram for each segment of the query multimedia signal and finding at least one optimum match delay by determining a peak in each delay histogram.

**9.** A computer program comprising program code means adapted to perform the steps of the method according to any claims from 1 to 8, when said program is run on a computer, a digital signal processor, a FPGA, an ASIC, a microprocessor, a micro-controller, or any other form of programmable hardware.

FIG. 1

FIG. 2

FIG. 3

FIG. 4

EP 2 323 046 A1

FIG. 5

EP 2 323 046 A1

Europäisches
Patentamt
European
Patent Office
Office européen
des brevets

**EUROPEAN SEARCH REPORT**

Application Number

EP 09 38 2213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/104022 A (SNELL & WILCOX LTD [GB]; DIGGINS JONATHAN [GB]) 27 August 2009 (2009-08-27) * abstract; figures 1,7 * * pages 4-6 * * page 18, line 18 - page 23, line 3 * ----- | 1-9 | INV. G06F17/30 |
| A,D | NAPHADE M R ET AL: "Supporting audiovisual query using dynamic programming" PROCEEDINGS OF THE ACM INTERNATIONAL MULTIMEDIA CONFERENCE AND EXHIBITION 2001 ASSOCIATION FOR COMPUTING MACHINERY US, no. IV, 2001, pages 411-420, XP002571090 * abstract * * page 412, paragraph 2 - page 415, paragraph 5 * ----- | 1,9 | |
| A | ADJEROH D A ET AL: "Video sequence similarity matching" MULTIMEDIA INFORMATION ANALYSIS AND RETRIEVAL. IAPR INTERNATIONAL WORKSHOP, MINAR'98. PROCEEDINGS, SPRINGER-VERLAG BERLIN, GERMANY, 1998, pages 80-95, XP002571091 ISBN: 3-540-64826-7 * abstract * * page 81, paragraph 2 - page 82, paragraph 2.1 * * page 87, paragraph 4 - page 88, paragraph 4.1 * ----- -/-- | 1-9 | TECHNICAL FIELDS SEARCHED (IPC) G06F H04H G06K |

The present search report has been drawn up for all claims

| Place of search | Date of completion of the search | Examiner |
|---|---|---|
| Munich | 2 March 2010 | Laurentowski, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 09 38 2213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | KNAPP C H ET AL: "The generalized correlation method for estimation of time delay" IEEE TRANSACTIONS ON ACOUSTICS, SPEECH AND SIGNAL PROCESSING, IEEE INC. NEW YORK, USA, vol. ASSP-24, no. 4, 1 August 1976 (1976-08-01), pages 320-327, XP002281206 ISSN: 0096-3518 * the whole document * ----- | 1-9 | |

TECHNICAL FIELDS
SEARCHED (IPC)

The present search report has been drawn up for all claims

| Place of search | Date of completion of the search | Examiner |
|---|---|---|
| Munich | 2 March 2010 | Laurentowski, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 38 2213

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2010

| Patent document cited in search report | Publication date | Patent family member(s) | Publication date |
|---|---|---|---|
| WO 2009104022 A | 27-08-2009 | GB 2457694 A | 26-08-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Wu et al.** A hierarchical scheme for rapid video copy detection. *IEEE Conf. on Applications of Computer Vision,* 2008
- Practical elimination of near-duplicates from web video search. *ACM Multimedia,* 2007

- **Hoad et al.** Detection of video sequences using compact signature. ACM Transactions on Information Systems, 2006